# EUROPEAN PATENT APPLICATION

(11) **EP 3 007 436 A1**
(43) Date of publication of application: **13.04.2016**
(21) Application number: 15185960.0
(22) Date of filing: 18.09.2015
(51) Int. Cl.: H04N 5/765, G09G 5/00

(54) **DISPLAY APPARATUS, DISPLAY SYSTEM, AND DISPLAY METHOD**

(30) Priority: 07.10.2014 KR 20140134815
(71) Applicant: Samsung Electronics Co., Ltd., Gyeonggi-do 16677 (KR)
(72) Inventor: LEE, Sang-won, Gyeonggi-do (KR); NOH, Young-joong, Gyeonggi-do (KR); CHOI, Hye-jin, Gyeonggi-do (KR)
(74) Representative: Walaski, Jan Filip

(57) **Abstract**

A display apparatus is provided. The display apparatus includes a display, communication circuitry configured to communicate with a converter, and a controller configured to, in response to a command to select an input source being received, transmit a control command to select one of a plurality of input sources to the converter based on the received command and control the communicator and the display to receive and output content converted to a predetermined transmission format from the converter.

## Description

The present invention relates to a display technology, and for example, to a display apparatus which is capable of selectively receiving contents received from a plurality of input sources through a single interface terminal, a display system, and a display method thereof.

In the related art, a display apparatus includes diverse input terminals in order to receive content signals from various external apparatuses. For example, a display apparatus in the related art may include input terminals for receiving a Composite Video Broadcast Signal (CVBS) signal, a component (YPbPr) signal, a Video Graphics Array (VGA) signal, a SCART signal, an audio signal, etc. In addition, the display apparatus switches a source to be reproduced inside the display apparatus. That is, the display apparatus in the related art has high possibility of incurring a signal interference and an appearance deterioration issue since the display apparatus must be connected to a plurality of cables.

Accordingly, there is a necessity for a display apparatus which receives various source inputs by reduced number of input terminals and a method for enabling a user to easily select a desired source input from among various source inputs.

The example embodiments have been provided to address the aforementioned and other problems and disadvantages occurring in the related art, and an aspect of the example embodiments provide a display apparatus which receives various source inputs by a reduced number of input terminals and a method for enabling a user to easily select a desired source input from among various source inputs.

According to an example embodiment, a display apparatus is provided including: a display, communication circuitry, e.g., a communicator, configured to communicate with a converter, and a controller configured to, in response to a command to select an input source being received, transmit a control command to select one of a plurality of input sources to the converter based on the received user command and to control the communicator and the display to receive and output content converted to a predetermined transmission format from the converter.

The communication circuitry may include a wired interface terminal. In addition, the wired interface terminal may include at least one of a power supply pin and a control signal pin.

The wired interface terminal may be a High Definition Multimedia Interface (HDMI) terminal. In addition, the power supply pin may be an eighteenth pin, and the control signal pin may be a thirteenth pin and include a Consumer Electronics Control (CEC) pin.

The input source may provide the converter with an analog content signal or a digital content signal.

The plurality of input sources may provide the converter with any one of, for example, a Composite Video Broadcast Signal (CVBS) signal, a component (YPbPr) signal, a Video Graphics Array (VGA) signal, a SCART signal, and an audio signal, respectively.

In response to an interface to which an input source other than the plurality of input sources is connected, the controller may be configured control the display to display a user interface screen for selecting one of: the interface to which an input source other than the plurality of input sources is connected; and an interface to which the converter is connected.

In response to one of the plurality of input sources being selectable, the controller may be configured to control the display to display an object which represents that an input source is switchable in a screen.

The command to select the input source may be received from a remote controller.

According to an example embodiment, a display system is provided including: a display apparatus configured to, in response to a command to select an input source being received, transmit a control command to select one of a plurality of input sources to a converter based on the received command and a converter configured to select one of the plurality of input sources based on the received control command, to convert a content received from the selected input source to a predetermined transmission format, and to transmit the converted content to the display apparatus.

According to an example embodiment, a display method is provided including: transmitting, in response to a command to select an input source being received, a control command to select one of a plurality of input sources to a converter based on the received command, receiving content converted to a predetermined transmission format from the converter, and outputting the received content.

The method may further include supplying power to the converter.

Transmitting the control command and receiving the content may be performed through a wired interface.

The wired interface may be a High Definition Multimedia Interface (HDMI).

The input source may provide the converter with an analog content signal or a digital content signal.

The plurality of input sources may provide the converter with any one of, for example, a Composite Video Broadcast Signal (CVBS) signal, a component (YPbPr) signal, a Video Graphics Array (VGA) signal, a SCART signal, and an audio signal, respectively.

The method may further include displaying, in response to an interface to which an input source other than the plurality of input sources is connected, a user interface screen for selecting one of: the interface to which an input source other than the plurality of input sources is connected; and an interface to which the converter is connected.

The method may further include displaying, in response to one of the plurality of input sources being selectable, an object which represents that an input source is switchable in a screen.

The command to select the input source may be received from a remote controller.

The above described display method may be realized as a program including an algorithm which is executable in a computer, and the program may be provided through a non-transitory computer readable medium.

According to various example embodiments, it is possible to realize a display apparatus which receives various source inputs by a reduced number of input terminals and in this case, a user is able to easily select a desired source input from among various source inputs.

The above and/or other aspects and advantages of the example embodiments will be more apparent from the following detailed description taken in conjunction with the accompanying drawings, in which like reference numerals refer to like elements, and wherein:
FIG. 1 is a conceptual diagram provided to illustrate an operation of a display system according to an example embodiment;
FIG. 2 is a block diagram illustrating a structure of a display apparatus according to an example embodiment;
FIG. 3 is a reference view provided to illustrate an operation of a converter according to an example embodiment;
FIG. 4 is a view illustrating a wired cable terminal according to an example embodiment;
FIG. 5 is a view illustrating an arrangement of pins of the cable terminal of FIG. 4;
FIGS. 6 and 7 are views illustrating a user interface screen of a display apparatus according to an example embodiment; and
FIG. 8 is a flowchart provided to illustrate a display method according to an example embodiment.

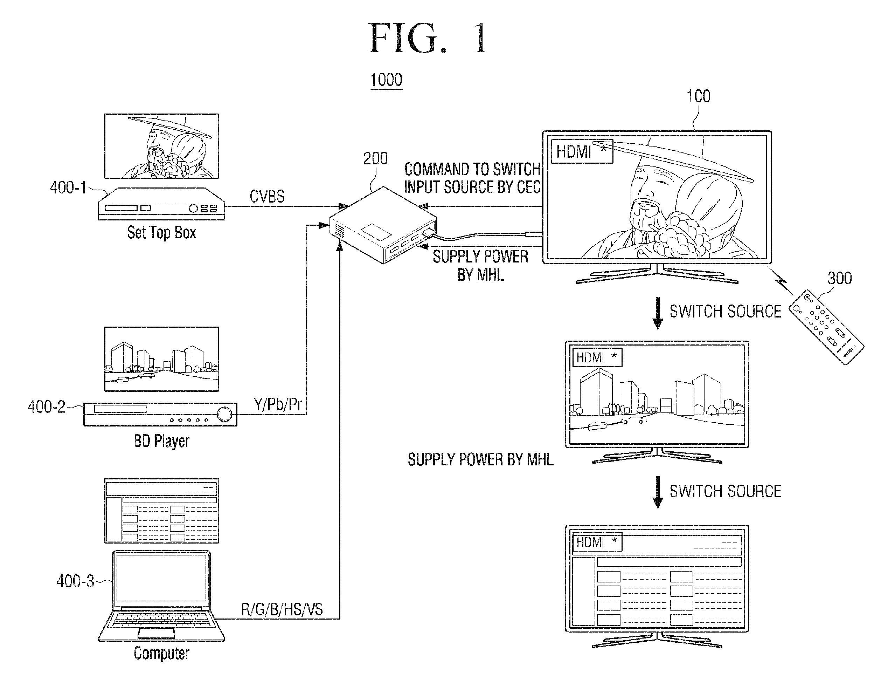

Referring to FIG. 1, a display system 1000 according to an example embodiment includes a display apparatus 100 and a converter 200.

The display apparatus 100 displays an image. The display apparatus 100 is connected to the converter 200 by a wired cable or in a wireless manner. In response to the display apparatus 100 being connected to the converter 200 by a wired cable, the display apparatus 100 transmits/receives a signal to/from the converter 200 by the wired cable according to, for example, a predetermined high-speed wired interface standard. That is, the display apparatus 100 may, for example, transmit/receive a Transition Minimized Display Signaling (TMDS), an authentication signal, and a control signal (Consumer Electronics Control (CEC)) to/from the converter 200 through a physical layer of the wired cable. Meanwhile, one or more wired cables may be connected between the display apparatus 100 and the converter 200. In this case, each wired cable may transmit/receive both of the TMDS and the control signal.

The display apparatus 100 receives a content from the converter 200 and displays the content. As described below, the converter 200 may be connected to a plurality of input sources and receive a content from each of the plurality of input sources. In this case, a command to select one of the plurality of input sources may be received through an input unit of the display apparatus 100. In this case, the input source refers, for example, to a device which provides the converter with content. For example, the input source may include a set-top box, a Blue-Ray Disk (BD), a Personal Computer (PC), a smart phone, an internet server, an MP3 player, etc.

In response to the command to select an input source being received, the display apparatus 100 generates a control command to select one of the plurality of input sources and transmits the generated control command to the converter 200 based on the received command. For example, as illustrated in FIG.1, a command to select one of a plurality of input sources 400-1, 400-2, 400-3 may, for example, be received through a remote controller 300, and the command signal may be transmitted to the display apparatus 100. In this case, the command through the remote controller 300 may be input by an operation of manipulating a direction key, a channel change button, or a scroll button of the remote controller. In case of the remote controller 300 having a touch screen, input may be performed through a touch.

The converter 200 is connected to the plurality of input sources 400-1, 400-2, 400-3, converts contents received from the plurality of input sources 400-1, 400-2, 400-3 to a predetermined format, and transmits the converted contents to the display apparatus 100. In this case, the predetermined format refers to a format defined according to an interface standard which connects the display apparatus 100 and the converter 200. The converter 200 receives the contents from each of the plurality of input sources 400-1, 400-2, 400-3, and thus, the converter 200 may convert the contents to the predetermined format and transmit the converted contents through a channel connected to the converter 200 (e.g., in case of a wired interface, a cable).

In addition, the converter 200 may receive a control signal from the display apparatus 100 through the interface (e.g., channel). As described above, in response to the received control command being a control command to select one of the plurality of input sources 400-1, 400-2, 400-3, the converter 200 may switch one of the plurality of input sources 400-1, 400-2, 400-3 according to the received control command. The converter 200 may convert the contents received from the selected input source to the predetermined transmission format.

The converter 200 transmits the converted contents to the display apparatus 100 through the interface.

The converter 200 may convert the contents received from the selected input source to the predetermined format or may convert the contents received from all of the input sources to the predetermined format. In this case, the converter 200 switches one of the plurality of input sources according to the received control command and transmits the contents converted to the predetermined format to the display apparatus 100 directly.

In response to the display apparatus 100 being tuned with a predetermined channel, the display apparatus 100 outputs the contents received from the converter 200. In response to the received control command being a control command to select one of the plurality of input sources, the display apparatus 100 outputs the contents received from the switched input source based on the received control command. That is, in response to an input source being switched, for example, through the remote controller 300, the contents received from the switched input source are output.

The structure and operation of the display apparatus 100 will be described in further detail below.

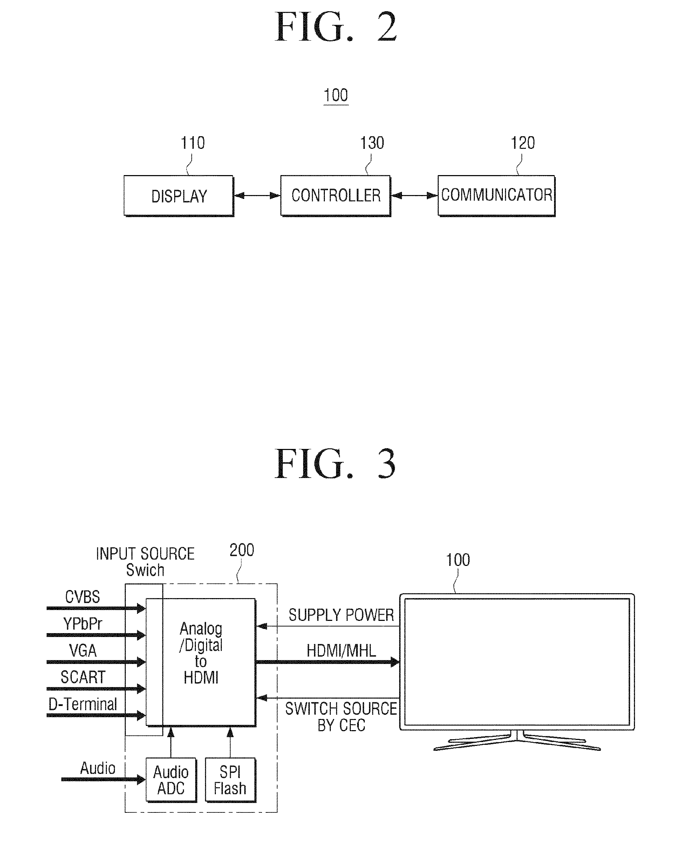

FIG. 2 is a block diagram illustrating a structure of a display apparatus according to an example embodiment.

Referring to FIG. 2, the display apparatus 100 according to an example embodiment includes a display 110, communication circuitry, which may be referred to herein as a communicator 120, and a controller 130.

According to various example embodiments, the display apparatus 100 is an apparatus which includes one or more displays and executes an application or displays content. For example, the display apparatus 100 may be realized as at least one of a digital television (TV), a tablet PC, a Portable Multimedia Player (PMP), a Personal Digital Assistant (PDA), a smart phone, a mobile phone, a digital picture frame, a digital Signage, a kiosk, etc.

The display 110 displays a content. In other words, the display 110 displays the contents received from the converter 200. For example, in response to a content converted to the predetermined transmission format being received from the converter 200, the display 110 performs an image-processing operation with respect to the content and displays the content. In addition, the display 110 may display at least one object in a screen. The object refers to a partial image corresponding to a particular function of the display apparatus 100 or the content displayed by the display apparatus 100. The display 110 displays one image, and the one image may include at least one object.

The type of object is not limited. For example, the object may be at least one of an application icon, a content icon, a thumbnail image, a folder icon, a widget, a list item, a menu, a content image, etc. The application icon executes an application included in the display apparatus 100 in response to selection. The content icon reproduces content in response to selection. The thumbnail image is an image of which size is reduced so that a user is able to discern the image at a glance. The folder icon displays a file in a folder in response to selection. The widget is an icon which provides a user interface so that the application icon is executed directly without selecting menus in several stages. The list item displays files in a form of a list. The menu image displays a selectable menu.

The display 110 includes a scaler (not shown), a frame rate converter (not shown), a video enhancer (not shown), and a display module (not shown). The scaler adjusts a picture rate of an image. The video enhancer removes deterioration or noise of an image, and processed image data is stored in a frame buffer. The frame rate converter adjusts a frame rate, an the image data in the frame buffer is transmitted to the display module according to the adjusted frame rate. The contents received from the converter 200 are image-processed and transmitted to the display module.

The display module is a circuit component which outputs an image in a display panel (not shown). The display module may include a timing controller (not shown), a gate driver (not shown), a data driver (not shown), and a voltage driver (not shown).

The timing controller (not shown) generates a gate control signal (scanning control signal) and a data control signal (data signal), rearranges received R, G, B data, and supplies the R, G, B data to the data driver (not shown). The gate driver (not shown) applies a gate on/off voltage (Vgh/Vgl) received from the voltage driver to the display panel according to the gate control signal generated by the timing controller. In response to a scaling operation being completed according to the data control signal generated by the timing controller (not shown), the data driver (not shown) inputs the RGB data of the image frame into the display panel. The voltage driver (not shown) generates and transmits respective driving voltages to the gate driver, the data driver, and the display panel.

The display panel displays an image according to the applied driving signal. The display panel may be designed as diverse display panels. For example, the display panel may be realized as any one of an Organic Light Emitting Diodes (OLED), a Liquid Crystal Display (LCD) panel, a Plasma Display Panel (PDP), a Vacuum Fluorescent Display (VFD), a Field Emission Display (FED), an Electro Luminescence Display (ELD), etc. The display panel may be realized as a light-emitting type in many cases, but may be also realized as a reflective display (E-ink, P-ink, Photonic Crystal). In addition, the display panel may be realized as a flexible display, a transparent display, etc.

The communication circuitry or communicator 120 communicates with the converter 200. For example, the communicator 120 may communicate with the converter 200 in a wired and/or wireless manner. When the communicator 120 is communicating with the converter 200 through a wired interface, the display apparatus 100 is connected to the converter 200 by a wired cable. In this, case, the display apparatus 100 transmits/receives a signal to/from the converter 200 by the wired cable according to the predetermined high-speed wired interface standard.

In this case, the wired interface standard may, for example, be a High Definition Multimedia Interface (HDMI) that is a uncompressed-type digital video/audio interface standard or may be a Digital Video/Visual Interface (DVI) standard or a Mobile High-Definition Link (MHL) standard, etc. The MHL standard refers to a high-speed wired interface standard which connects a mobile device and a TV as an interface standard similar to the HDMI. The DVI standard is a wired interface standard which digitizes and transmits a video image.

In this case, the communicator 120 may transmit/receive a TMDS, an authentication signal (e.g., EDID), a control signal (CEC), and an encoding signal (e.g., HDCP) to/from the converter 200 through a physical layer of the wired cable. In case of the communicator 120 including a plurality of wired cables, each wired cable may transmit/receive both of the TMDS and the control signal.

As described above, the converter 200 may be connected to the plurality of input sources and receive a content from each of the plurality of input sources. In this case, a command to select one of the plurality of input sources may be received through the input unit of the display apparatus 100. In this case, the input source refers to a device which provides content. For example, the input source may include a set-top box, a BD player, a PC, a smart phone, an internet server, an MP3 player, etc.

In response to a command to select an input source being received, the communicator 120 transmits a control command to select one of the plurality of input sources to the converter 200 according to the received command. In the above described wired interface standard, transmission of the control command may be performed by a CEC signal.

The communicator 120 receives the contents converted to the predetermined transmission format from the converter 200. The converted contents are received as TMDS.

In the above described example embodiment, a signal is transmitted/received through a wired interface, but the signal may be transmitted/received through a wireless interface. That is, a content or a control signal may be transmitted/received to/from the converter 200 in a predetermined format according to a wireless interface standard.

The controller 130 may be configured to control overall operations of the display apparatus 100. For example, in response to a command to select an input source being received, the controller 130 may be configured to control the communicator 120 to generate a control command to select one of the plurality of input sources according to the received user command and transmit the generated control command to the communicator 120.

In addition, the controller 130 controls the communicator 120 and the display 110 to receive and output the contents converted to the predetermined transmission format from the converter 200.

The controller 130 includes a hardware component, such as, a Central Processing Unit (CPU), a cache memory, etc., an operating system, and a software element of an application which implements a particular purpose. A control command with respect to each component for driving the display apparatus 100 is read from a memory, and an electronic signal is generated according to the read control command in order to drive the components of the hardware.

In addition, although it is not illustrated in the drawings, the display apparatus 100 may further include an input unit (not shown) which receives a command. The input unit (not shown) may be realized as a physical button that a user is able to manipulate to input a command, may be realized as a touch screen, or may include an interface which is capable of receiving a command from a remote controller. Other than the above, the display apparatus 100 may include various user input means such as a motion recognition means, a voice recognition means, a text input means, etc. In the example embodiment, an input is performed by the remote controller 300, but according to various example embodiments, other input means may be used.

In addition, the display apparatus 100 includes components of a common calculator. That is, the display apparatus 100 includes a storage for storing information, a power unit for supplying power, etc.

FIG. 3 is a reference view provided to illustrate an operation of a converter according to an example embodiment.

As described above, the converter 200 is connected to the plurality of input sources and receives contents from each of the plurality of input sources. The plurality of input sources may transmit contents in a form of an analog signal or a digital signal. The converter 200 may be connected to the plurality of input sources. Accordingly, the display apparatus 100 does not need to include a plurality of input terminals, and thus, an appearance of the display apparatus 100 may be neatened and a circuit structure may become simple. Accordingly, the converter 200 is connected to the display apparatus 100 through a single communication channel, and transmission of a content signal, transmission of a control signal (CEC), and power supply may be performed through the single channel.

Each of the plurality of input sources may be any one of a CVBS signal, a component (YPbPr) signal, a VGA signal, a SCART signal, and an audio signal.

The CVBS signal refers to a type of an analog TV signal (except for voice), that is, a signal before being combined with a voice signal and modulated with respect to a Radio Frequency (RF) carrier wave. The CVBS signal is a form included in a broadcast standard such as NTSC, PAL, SECAM, etc. A composite video is transmitted/received in a composite form where three source signals, that is, Y, U, and V (referred to as 'YUV') are combined with a sync pulse for synchronization.

The component video (YPbPr) signal refers to an image signal divided into two or more components. Generally, the component video (YPbPr) signal refers to a kind of analog image information which is transmitted or stored in a form of three divided signals. A shape of a cable terminal is the same as that of the composite video, and a component video cable does not transmit audio in the similar manner of the composite video. The component video (YPbPr) signal supports resolution of 480i, 480p, 576i, 576p, 720p, 1080i, and 1080p.

The VGA signal refers to an analog-type computer display standard established by International Business Machines (IBM) in 1987. The VGA method is a standard which is supported most of the computer manufacturers by default and is used in many PC display apparatuses to display a screen before raising an apparatus driver.

The SCART refers to a video communication method of connecting devices through 21-pins and a signal standard which is mainly used in Europe. The SCART supports an analog RGB video and S-video by default, and an analog stereo audio is transmitted. CENELEC EN 50029-1 and IEC60933 define a default connection according to SCART.

The converter 200 converts signals provided by the plurality of input sources to a predetermined transmission format, for example, a HDMI transmission format. For example, in response to a control command to select an input source being received from the display apparatus 100, the converter 200 selects one of the plurality of input sources according to the received control command, converts a content received from the selected input source to the predetermined transmission format, and transmits the converted content to the display apparatus 100.

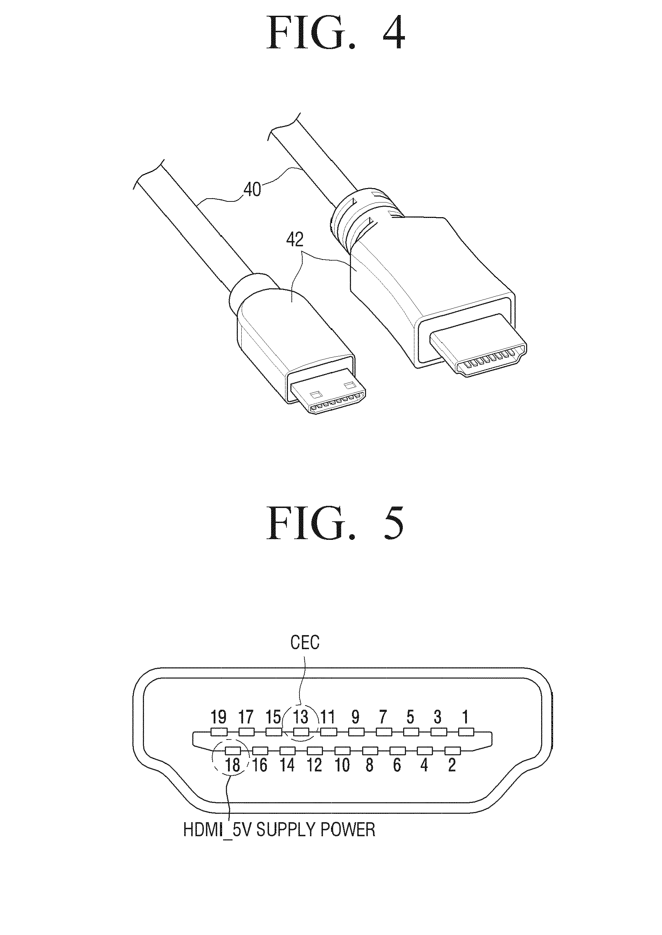

FIG. 4 is a view illustrating a wired cable terminal according to an embodiment, and FIG. 5 is a view illustrating an arrangement of pins of the cable terminal of FIG. 4.

As described above, the display apparatus 100 and the converter 200 may be interconnected through a wired interface cable 40. The wired interface cable 40 includes a wired cable terminal 42. The wired cable terminal 42 may be a HDMI cable terminal in a form illustrated in FIG. 4.

As illustrated in FIG. 5, the wired cable terminal may include a plurality of pins. A part of the pins transmit a TMDS, and another part of the pins supply power. The other pins transmit a control signal. In case of the HDMI terminal, a power supply pin is the eighteenth (18th) pin, and a control signal pin is the thirteenth (13th) pin and a CEC pin. The power supply pin may supply +5V power (50 mA, maximally) and may supply power to the converter 200 through an MHL terminal. In addition, the power supply pin may include a hot plug sensor pin for sensing a cable connection, a pin for DDC, etc.

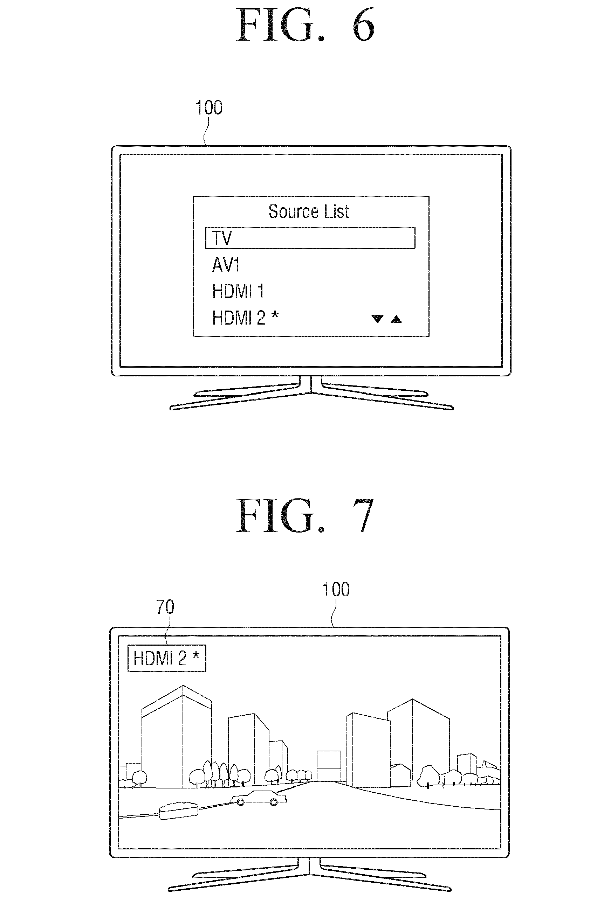

FIGS. 6 and 7 are views illustrating a user interface screen of a display apparatus according to an example embodiment.

As described above, a plurality of inputs may be connected to the display apparatus 100. In addition, the display apparatus 100 may include a tuner for automatically receiving a broadcast signal or may further include a wired interface which is not connected to the converter. In this case, an input operation of selecting the converter 200 or selecting a TV tuner needs to be performed before selecting a plurality of input sources connected to the single converter 200. Accordingly, in response to an interface to which an input source other than the plurality of input sources is connected, the controller 130 may be configured to control the display 110 to display a user interface screen for selecting one of the interface to which an input source other than the plurality of input sources is connected and an interface to which the converter 200 is connected.

For example, as illustrated in FIG. 6, in response to an interface to which a converter capable of selecting an input source is connected (HDMI 2), a TV interface, other audio/video signal source interface (AV1), and an interface connected to an input source other than the input source connected to the converter 200 (HDMI 1), the controller 130 may be configured to control the display 110 to display a user interface screen for selecting any one of the interfaces. A selected input is transmitted to the display apparatus 100 through the remote controller 300, and the controller 130 of the display apparatus 100 is configured to select one interface.

In addition, in response to one of the plurality of input sources being selectable (when, for example, the HDMI 2 is selected in the example embodiment of FIG. 6), the controller 130 may be configured to control the display 110 to display the selectable input source in the screen. That is, the display apparatus 100 may display a set-top box, a BD player, a PC, a smart phone, an internet server, an MP3 player, etc. connected to the converter 200 and select one apparatus according to the input. In this case, the display apparatus 100 displays the content received from the selected input source.

Meanwhile, in response to the converter capable of selecting an input source being selected in the above described example embodiment, the controller 130 may be configured to control the display 110 to display an object which represents that the current content providing apparatus (e.g., converter) may switch an input source in the screen. In the example embodiment of FIG. 7, the HDMI 2 may select the input source, and thus, it is possible to perform a distinct display like "HDMI 2*."

A display method according to various embodiments will be described below.

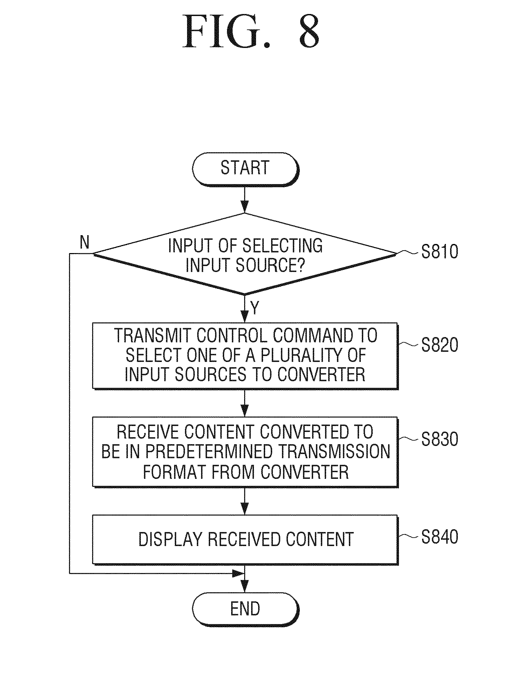

FIG. 8 is a flowchart provided to illustrate a display method according to an example embodiment.

Referring to FIG. 8, in response to a command to select an input source being received (S810-Y, a display method according to an example embodiment includes transmitting a control command to select one of a plurality of input sources to a converter according to the received command (S820), receiving content converted to a predetermined transmission format from the converter (S830), and outputting the received content (S840).

The display method may further include supplying power to the converter.

In addition, transmitting the control command and receiving the content may be performed through a wired interface.

The wired interface may be a HDMI.

In this case, the input source may provide the converter with an analog content signal or a digital content signal.

The plurality of input sources may provide the converter with any one of a CVBS signal, a component (YPbPr) signal, a VGA signal, a SCART signal, and an audio signal, respectively.

In response to an interface to which an input source other than the plurality of input sources is connected, the method may further include displaying a user interface screen for selecting one of the interfaces to which an input source other than the plurality of input sources is connected and an interface to which the converter is connected.

The method may further include displaying, in response to one of the plurality of input sources being selectable, an object which represents that an input source is switchable in a screen.

The command to select the input source may be received from a remote controller.

The above described display method may be realized as a program including an algorithm which is executable in a computer, and the program may be provided through a non-transitory computer readable medium.

The non-transitory computer readable medium refers to a medium which may store data permanently or semi-permanently rather than storing data for a short time such as a register, a cache, and a memory and may be readable by an apparatus. As an example, the above-described various applications and programs may be stored in the non-transitory computer readable medium such as a compact disc (CD), a digital versatile disk (DVD), a hard disk, a Blu-ray disk, a universal serial bus (USB), a memory card, a read-only memory (ROM), and the like, and provided therein. For example, as described above, and will be appreciated by those skilled in the art, the described systems, methods and techniques may be implemented in digital electronic circuitry including, for example, electrical circuitry, logic circuitry, hardware, computer hardware, firmware, software, or any combinations of these elements. Apparatus embodying these techniques may include appropriate input and output devices, a computer processor, and a computer program product tangibly embodied in a non-transitory machine-readable storage device or medium for execution by a programmable processor. A process embodying these techniques may be performed by a programmable hardware processor executing a suitable program of instructions to perform desired functions by operating on input data and generating appropriate output. The techniques may be implemented in one or more computer programs that are executable on a programmable processing system including at least one programmable processor coupled to receive data and instructions from, and transmit data and instructions to, a data storage system, at least one input device, and at least one output device. Each computer program may be implemented in a high-level procedural or object-oriented programming language or in assembly or machine language, if desired; and in any case, the language may be compiled or interpreted language. Suitable processors include, by way of example, both general and special purpose microprocessors. Generally, a processor will receive instructions and data from a rea-only memory and/or a random access memory. Non-transitory storage devices suitable for tangibly embodying computer program instructions and data include all forms of computer memory including, but not limited to, non-volatile memory, including by way of example, semiconductor memory devices, such as Erasable Programmable Read-Only Memory (EPROM), Electrically Erasable Programmable Read-Only Memory (EEPROM), and flash memory devices; magnetic disks, such as internal hard disks and removable disks; magneto-optical disks; Compact Disc Read-Only Memory (CD-ROM), digital versatile disk (DVD), Blu-ray disk, universal serial bus (USB) device, memory card, or the like. Any of the foregoing may be supplemented by, or incorporated in, specially designed hardware or circuitry including, for example, application-specific integrated circuits (ASICs) and digital electronic circuitry. Thus, methods for providing image contents described above may be implemented by a program including an executable algorithm that may be executed in a computer, and the program may be stored and provided in a non-transitory computer readable medium.

The foregoing example embodiments and advantages are merely illustrative and are not to be construed as limiting the example embodiments. The present teaching can be readily applied to other types of devices. Also, the description of the example embodiments is intended to be illustrative, and many alternatives, modifications, and variations will be apparent to those skilled in the art, while still falling within the scope of the invention as defined by the claims.

## Claims

1. A display apparatus comprising:
a display;
communication circuitry configured to communicate with a converter; and
a controller configured to, in response to a command to select an input source being received, transmit a control command to select one of a plurality of input sources to the converter based on the received command and to control the communication circuitry and the display to receive and output content converted to a predetermined transmission format from the converter.

2. The apparatus as claimed in claim 1, wherein the communication circuitry comprises a wired interface terminal,
wherein the wired interface terminal comprises at least one of a power supply pin and a control signal pin.

3. The apparatus as claimed in claim 2, wherein the wired interface terminal is a High Definition Multimedia Interface (HDMI) terminal, and
wherein the power supply pin is an eighteenth pin, and the control signal pin is a thirteenth pin including a Consumer Electronics Control (CEC) pin.

4. The apparatus as claimed in any one of claims 1 to 3, wherein the input source provides the converter with an analog content signal or a digital content signal.

5. The apparatus as claimed in any one of claims 1 to 4, wherein the plurality of input sources provide the converter with any one of a Composite Video Broadcast Signal (CVBS) signal, a component (YPbPr) signal, a Video Graphics Array (VGA) signal, a SCART signal, and an audio signal.

6. The apparatus as claimed in any one of claims 1 to 5, wherein in when an interface to which an input source other than the plurality of input sources is connected, the controller is configured to control the display to display a user interface screen for selecting one of: the interface to which an input source other than the plurality of input sources is connected, and an interface to which the converter is connected.

7. The apparatus as claimed in any one of claims 1 to 6, wherein in response to one of the plurality of input sources being selectable, the controller is configured to control the display to display an object which represents that an input source is switchable in a screen.

8. The apparatus as claimed in any one of claims 1 to 7, wherein the command to select the input source is received from a remote controller.

9. A display method comprising:
transmitting, in response to a command to select an input source being received, a control command to select one of a plurality of input sources to a converter based on the received command;
receiving content converted to a predetermined transmission format from the converter; and
outputting the received content.

10. The method as claimed in claim 9, further comprising:
supplying power to the converter.

11. The method as claimed in claim 9 or claim 10, wherein transmitting the control command and receiving the content are performed through a wired interface.

12. The method as claimed in claim 11, wherein the wired interface is a High Definition Multimedia Interface (HDMI).

13. The method as claimed in any one of claims 9 to 12, wherein the input source provides the converter with an analog content signal or a digital content signal.

14. The method as claimed in any one of claims 9 to 13, wherein the plurality of input sources provide the converter with any one of a Composite Video Broadcast Signal (CVBS) signal, a component (YPbPr) signal, a Video Graphics Array (VGA) signal, a SCART signal, and an audio signal.

15. The method as claimed in any one of claims 9 to 14, further comprising:
displaying, in response to an interface to which an input source other than the plurality of input sources is connected, a user interface screen for selecting one of: the interface to which an input source other than the plurality of input sources is connected, and an interface to which the converter is connected.
